# EUROPEAN PATENT APPLICATION

(11) **EP 4 253 591 A1**
(43) Date of publication of application: **04.10.2023**
(21) Application number: 21898478.9
(22) Date of filing: 17.11.2021
(51) Int. Cl.: C22C 38/58, C22C 38/44, C21D 8/02, C25F 1/06, H01M 8/021, H01M 8/0258, H01M 8/1018

(54) **AUSTENITIC STAINLESS STEEL FOR POLYMER FUEL CELL SEPARATOR WITH IMPROVED CONTACT RESISTANCE, AND MANUFACTURING METHOD THEREOF**

(30) Priority: 25.11.2020 KR 20200160498
(71) Applicant: POSCO Co., Ltd, Pohang-si, Gyeongsangbuk-do 37859 (KR)
(72) Inventor: KIM, Youngjun, Pohang-si Gyeongsangbuk-do 37859 (KR); KIM, Dong-hoon, Pohang-si Gyeongsangbuk-do 37655 (KR); SEO, Bo-sung, Pohang-si Gyeongsangbuk-do 37656 (KR)
(74) Representative: Nederlandsch Octrooibureau
(86) International application number: PCT/KR2021/016836
(87) International publication number: WO 2022/114652

(57) **Abstract**

Disclosed is an austenitic stainless steel for a fuel cell separator with improved contact resistance.

The austenitic stainless steel for a fuel cell separator with improved contact resistance according to an embodiment of the present disclosure includes, in percent by weight (wt%), at most 0.1% of C (excluding 0), at most 3.0% of Si (excluding 0), at most 3.0% of Mn (excluding 0), 20 to 30% of Cr, 8 to 20% of Ni, at most 0.003% of S, at most 0.03% of P, at most 0.6% of Mo (excluding 0), at most 0.8% of Cu (excluding 0), 0.1 to 0.3% of N, at most 2.0% of W (excluding 0), and the remainder being Fe and other inevitable impurities.

## Description

### [Technical Field]

The present disclosure relates to an austenitic stainless steel for polymer fuel cell separators and a manufacturing method thereof, and more particularly, to a stainless steel for polymer fuel cell separators with improved contact resistance and a manufacturing method thereof.

### [Background Art]

Polymer electrolyte fuel cells are fuel cells using a polymer membrane having proton exchange properties as an electrolyte. Polymer electrolyte fuel cells have advantages of low operating temperature, high current density, high output density, quick start, and quick response to changes in load time compared to other types of fuel cell.

A polymer electrolyte fuel cell includes unit cells, each made up of a membrane electrode assembly (MEA), which includes an electrolyte, electrodes and a gas diffusion layer (GDL), and a separator. A structure composed of a plurality of unit cells connected in series is referred to as a fuel cell stack.

The separator, as a core component of the polymer electrolyte fuel cell stack, is an electrically conductive plate provided with a gas flow channel for an oxidation electrode (or fuel electrode) on one side and a gas flow channel for a reduction electrode (or air electrode) on the other side.

The separator serves as a current collector that conducts electrons generated at the oxidation electrode toward the reduction electrode of a next cell and supports the MEA. In addition, the separator serves as a channel for removing water generated while the fuel cell operates simultaneously supplying a fuel (hydrogen or reformed gas) and an oxidizer (oxygen and air) respectively to the electrodes of the fuel cell.

Graphite having a flow channel formed by mechanically processing has been conventionally used in most of separators. However, graphite is not suitable for mass production due to difficulty in processing and high price thereof. Because of these reasons, stainless steels have been widely used in recent years in consideration of manufacturing costs and weight. In the case of using a stainless steel as a separator of a polymer electrolyte fuel cell, a stainless steel sheet having a thickness of 0.1 mm is commonly used.

The stainless steel sheet is not annealed in an oxidizing atmosphere due to difficulty in controlling tension of a coil and to prevent surface defects such as indentation flaws formed after cold rolling, but bright-annealed in a reducing atmosphere using hydrogen or nitrogen for recrystallization and removal of residual stress. Since an oxide film formed by bright annealing has high resistance, a post-processing step to improve interfacial contact resistance is required to use the stainless steel as a separator of fuel cells.

As the post-processing step, a process of coating the stainless steel with a conductive material such as gold (Au), carbon, or nitride has been suggested. However, such a method may cause a problem of increasing manufacturing costs and manufacturing time due to the additional process for coating a noble metal.

### (Related Art Document)

(Patent Document 1) Korean Patent Laid-open Publication No. 10-2010-0073407 (July 1, 2010)

### [Disclosure]

### [Technical Problem]

To solve the aforementioned problems, the present disclosure provides a stainless steel for polymer fuel cell separators having improved interfacial contact resistance only by AC electrolysis for a short period of time without additional surface treatment such as coating on an austenitic stainless steel and a manufacturing method thereof.

### [Technical Solution]

In accordance with an aspect of the present disclosure, an austenitic stainless steel for a fuel cell separator with improved contact resistance includes, in percent by weight (wt%), at most 0.1% of C (excluding 0), at most 3.0% of Si (excluding 0), at most 3.0% of Mn (excluding 0), 20 to 30% of Cr, 8 to 20% of Ni, at most 0.003% of S, at most 0.03% of P, at most 0.6% of Mo (excluding 0), at most 0.8% of Cu (excluding 0), 0.1 to 0.3% of N, at most 2.0% of W (excluding 0), and the remainder being Fe and other inevitable impurities.

In addition, in the present disclosure, the austenitic stainless steel may include, in percent by weight (wt%), 0.01 to 0.5% of W.

In addition, in the present disclosure, the austenitic stainless steel may have an interfacial contact resistance of at most 10 mΩ·cm² (100 N/cm²).

In accordance with another aspect of the present disclosure, a method of manufacturing an austenitic stainless steel for a fuel cell separator with improved corrosion resistance includes: bright annealing a cold-rolled austenitic stainless steel comprising, in percent by weight (wt%), at most 0.1% of C (excluding 0), at most 3.0% of Si (excluding 0), at most 3.0% of Mn (excluding 0), 20 to 30% of Cr, 8 to 20% of Ni, at most 0.003% of S, at most 0.03% of P, at most 0.6% of Mo (excluding 0), at most 0.8% of Cu (excluding 0), 0.1 to 0.3% of N, at most 2.0% of W (excluding 0), and the remainder being Fe and other inevitable impurities; and performing alternating current electrolysis on the bright-annealed material in a sulfuric acid solution, wherein the alternating current electrolysis is performed by applying a current density of 15 to 30 A/dm² for 7 seconds to 10 seconds.

In addition, in the present disclosure, the austenitic stainless steel may include, in percent by weight (wt%), 0.01 to 0.5% of W.

In addition, in the present disclosure, the bright annealing may be performed at a temperature of 1050°C to 1150°C.

In addition, in the present disclosure, a temperature of the sulfuric acid solution may be from 40 to 80°C.

In addition, in the present disclosure, a concentration of the sulfuric acid solution may be from 50 to 300 g/L.

In addition, in the present disclosure, a frequency of the alternating current may be from 10 to 120 Hz.

### [Advantageous Effects]

According to an embodiment of the present disclosure, provided are a stainless steel for polymer fuel cell separators with improved contact resistance by optimizing electrolysis conditions and a manufacturing method thereof.

### [Best Mode]

According to an embodiment of the present disclosure, a stainless steel for polymer fuel cell separators with improved contact resistance and a manufacturing method thereof may be provided by optimizing conditions for electrolysis.

### [Modes of the Invention]

Hereinafter, preferred embodiments of the present disclosure will now be described. However, the present disclosure may be embodied in many different forms and should not be construed as being limited to the embodiments set forth herein. Rather, these embodiments are provided so that this disclosure will be thorough and complete, and will fully convey the scope of the disclosure to those skilled in the art.

The terms used herein are merely used to describe embodiments. Thus, an expression used in the singular encompasses the expression of the plural, unless it has a clearly different meaning in the context. In addition, it is to be understood that the terms such as "including" or "having" are intended to indicate the existence of features, steps, functions, components, or combinations thereof disclosed in the specification, and are not intended to preclude the possibility that one or more other features, steps, functions, components, or combinations thereof may exist or may be added.

Meanwhile, unless otherwise defined, all terms used herein have the same meaning as those commonly understood by one of ordinary skill in the art to which this disclosure belongs. Thus, these terms should not be interpreted in an idealized or overly formal sense unless expressly so defined herein. As used herein, the singular forms are intended to include the plural forms as well, unless the context clearly indicates otherwise.

In addition, the terms "about", "substantially", etc. used throughout the specification mean that when a natural manufacturing and substance allowable error are suggested, such an allowable error corresponds a value or is similar to the value, and such values are intended for the sake of clear understanding of the present disclosure or to prevent an unconscious infringer from illegally using the disclosure of the present disclosure.

An austenitic stainless steel for a fuel cell separator with improved contact resistance according to an embodiment of the present disclosure includes, in percent by weight (wt%), at most 0.1% of C (excluding 0), at most 3.0% of Si (excluding 0), at most 3.0% of Mn (excluding 0), 20 to 30% of Cr, 8 to 20% of Ni, at most 0.003% of S, at most 0.03% of P, at most 0.6% of Mo (excluding 0), at most 0.8% of Cu (excluding 0), 0.1 to 0.3% of N, at most 2.0% of W (excluding 0), and the remainder being Fe and other inevitable impurities. Hereinafter, reasons for numerical limitations on the contents of alloying elements in the embodiment of the present disclosure will be described.

The content of C is at most 0.1% (excluding 0).

Carbon (C), as a low-priced austenite-stabilizing element, effectively inhibits formation of a delta (δ)-ferrite phase. In addition, C is an interstitial element and improves yield strength of a steel material by solid solution strengthening effect. However, because an excess of C deteriorates ductility, toughness, and corrosion resistance of a steel material, an upper limit thereof is controlled to 0.1. Therefore, the C content may be controlled to at most 0.1% (excluding 0).

The content of Si is at most 3.0% (excluding 0).

Silicon (Si) is an element added as a deoxidizer in a steelmaking process and has an effect on improving corrosion resistance by forming an Si-oxide in a passivated layer by bright annealing when added in a certain amount. However, an excess of Si includes formation of intermetallic compounds such as a δ-ferrite phase and a sigma phase during casting resulting in deterioration of hot workability, ductility, and toughness of the steel material. Therefore, the Si content may be controlled to at most 3.0% (excluding 0).

The content of Mn is at most 3.0% (excluding 0).

Manganese (Mn), as an austenite phase-stabilizing element, is effective on inhibiting formation of martensite. Also, Mn is a cheaper element than Ni and improves cold workability of a steel material. However, an excess of Mn causes formation of a large amount of inclusions (MnS) that deteriorate hot workability, ductility, and toughness of a steel material. Therefore, the Mn content may be controlled to at most 3.0% (excluding 0).

The content of Cr is from 20 to 30%.

Chromium (Cr) is an element added to improve corrosion resistance by forming a passivated layer in an oxidizing environment and is added in an amount of 20% or more to obtain corrosion resistance in a fuel cell environment. However, when the Cr content is excessive over 30%, formation of delta (δ) ferrite is promoted in a slab, resulting in deterioration of hot workability of a steel material. Also, because austenite becomes unstable, a large amount of Ni needs to be included to obtain phase stability, resulting in increased costs. Therefore, the Cr content may be controlled from 20 to 30%.

The content of Ni is from 8 to 20%.

Nickel (Ni), as an austenite phase-stabilizing element, inhibits formation of a delta (δ)-ferrite phase, and is added in an amount of 8 % or more to improve hot workability and cold workability. However, Ni that is a high-priced element causes an increase in costs of raw materials in the case of adding a large amount, and therefore an upper limit thereof is controlled to 20%.

The content of P is at most 0.03% and the content of S is at most 0.003%.

Because phosphorus (P) and sulfur (S) are harmful elements segregated in crystal grain boundaries resulting in deterioration of corrosion resistance and hot workability, and thus the contents of P and S should be controlled as low as possible. Therefore, the P content may be controlled to at most 0.03%, and the S content may be controlled to at most 0.003%.

The content of Mo is at most 0.6% (excluding 0).

Molybdenum (Mo) is an element added to a stainless steel to improve corrosion resistance. However, Mo, as a high-priced element, causes an increase in costs of raw materials and deteriorates cold workability in the case of adding a large amount. Therefore, the Mo content may be controlled to at most 0.6% (excluding 0).

The content of Cu is at most 0.8% (excluding 0).

Copper (Cu), as an austenite phase-stabilizing element, is effective on improving cold workability by inhibiting formation of martensite and improving corrosion resistance of a steel material in a reducing environment. However, an excess of Cu may deteriorate hot workability due to solidification segregation. Therefore, the Cu content may be controlled to at most 0.8% (excluding 0).

The content of N is from 0.1 to 0.3%.

Nitrogen (N) has an effect on stabilizing an austenite phase and improves strength of a material, and thus nitrogen is added in an amount of 0.1% or more. However, because an excess of N may deteriorate elongation, an upper limit thereof is controlled to 0.3%. Therefore, the N content may be controlled to a range of 0.1 to 0.3%.

The content of W is at most 2.0% (excluding 0).

Tungsten (W) has effects on improving corrosion resistance and lowering interfacial contact resistance in a sulfuric acid atmosphere where a fuel cell operates. Particularly, corrosion resistance may be maximized by simultaneously adding W and Cu in an environment where sulfuric acid is condensed. However, an excess of W may cause an increase in raw materials because W is a high-priced element and cause deterioration of elongation. Therefore, the W content may preferably be controlled to at most 2.0% (excluding 0). A more preferable lower limit of the W content is 0.01%, and a more preferable upper limit of the W content is 0.5%.

The remaining component of the composition of the present disclosure is iron (Fe). However, the composition may include unintended impurities inevitably incorporated from raw materials or surrounding environments. In the present disclosure, addition of other unintended alloying elements in addition to the above-described alloying elements is not excluded. The impurities are not specifically mentioned in the present disclosure, as they are known to any person skilled in the art.

Because a separator serves as an electrical path through which electrons generated and consumed at the electrodes pass while a fuel cell operates, excellent electrical conductivity is required between the separator and a gas diffusion layer. That is, electrical resistance of the separator closely affects performance of the fuel cell, and thus interfacial contact resistance of materials used for the separator needs to be lowered below an allowable level.

In accordance with functional requirements of the separator, The United States Department of Energy (DOE) suggests that a target interfacial contact resistance of a separator should be 10 mΩ·cm² (100 to 150 N/cm²) or less.

The austenitic stainless steel according to an embodiment of the present disclosure may have an interfacial contact resistance of 10 mΩ·cm² (100 N/cm²) or less.

The austenitic stainless steel according to an embodiment of the present disclosure is manufactured by the following method.

The method includes: bright annealing a cold-rolled austenitic stainless steel including, in percent by weight (wt%), at most 0.1% of C (excluding 0), at most 3.0% of Si (excluding 0), at most 3.0% of Mn (excluding 0), 20 to 30% of Cr, 8 to 20% of Ni, at most 0.003% of S, at most 0.03% of P, at most 0.6% of Mo (excluding 0), at most 0.8% of Cu (excluding 0), 0.1 to 0.3% of N, at most 2.0% of W (excluding 0), and the remainder being Fe and other inevitable impurities; and performing alternating current electrolysis on the bright-annealed material in a sulfuric acid solution, wherein the alternating current electrolysis is performed by applying a current density of 15 to 30 A/dm² for 7 seconds to 10 seconds.

In addition, according to an embodiment of the present disclosure, the austenitic stainless steel may further include, in percent by weight (wt%), 0.01 to 0.5% of W.

Reasons for numerical limitations on the contents of the alloying elements are as described above.

In addition, according to an embodiment of the present disclosure, the bright annealing may be performed at a temperature of 1050°C to 1150°C.

Bright Annealing refers to annealing conducted in a non-oxidizing atmosphere. In general, a coil having a thickness of 0.3 mm or less is bright-annealed in a reducing atmosphere containing hydrogen and nitrogen due to difficulty in controlling tension of the coil and to prevent surface defects. In this case, the H content may be 70% or more. In addition, a temperature of bright annealing may be from 1050 to 1150°C to inhibit re-oxidization of a cold-rolled austenitic stainless steel occurring during a heat treatment process.

Since the bright annealing is performed in a reducing atmosphere, a passivated layer having a smooth surface and a thickness of several nanometers may be formed, and the passivated layer may include a Cr-Fe oxide, a Mn oxide, a Si oxide, and the like.

The cold-rolled, bright-annealed steel material may have increased contact resistance by the passivated layer having a thickness of several nanometers and formed on the surface thereof. Therefore, in order to use the cold-rolled, bright-annealed steel material as a fuel cell separator, the non-conductive passivated layer formed on the surface should be removed and a new conductive layer should be formed thereon.

Meanwhile, a flow of electricity, i.e., electric current, is broadly classified into two types: direct current (DC) and alternating current (AC). Alternating current refers to an electric current which periodically reverses direction and changes magnitude thereof continuously over time. Electrolysis is a technique of decomposing a material by causing a chemical change while passing a current through an electrolytic solution and is also referred to as electrolytic decomposition. Electrolysis is classified into DC electrolysis and AC electrolysis by types of power source. In the case of AC electrolysis, an electrode serves as a positive electrode at one moment and then as a negative electrode at the next moment, such that oxidation and reduction consecutively occurs at one electrode.

In the case of reforming the surface of the austenitic stainless steel by applying DC electrolysis, it is difficult to use the austenitic stainless steel as a material for fuel cell separators due to high interfacial contact resistance. As a result of considering various control conditions to solve this problem, AC power is introduced.

Thus, according to an embodiment of the present disclosure, the passivated layer is removed from the cold-rolled, bright-annealed austenitic stainless steel by performing alternating current electrolysis in a sulfuric acid solution, and a conductive film with an improved interfacial contact resistance is formed thereon.

In the present disclosure, all types of waveform such as sine waves, square waves, triangle waves and sawtooth waves may be applied to the AC power.

Meanwhile, when a current density applied thereto is less than 15 A/dm², the film formed by bright annealing is not easily removed. In the case of applying an excess of current density, the effect on removing the passivated layer is saturated, and problems of side reactions such as oxygen generation or surface erosion by over acid pickling may occur, and therefore the current density applied may be controlled to a range of 15 to 30 A/dm².

Also, according to an embodiment of the present disclosure, a frequency of the applied AC may be from 10 to 120 Hz.

When the frequency of the applied AC is less than 10 Hz, a reforming efficiency decreases, and thus the frequency may be controlled to a range of 10 to 120Hz.

In addition, according to an embodiment of the present disclosure, the AC electrolysis may be performed for 7 seconds to 10 seconds. When an AC electrolysis time is shorter than 7 seconds, the acid pickling effect of a hot-rolled, annealed steel sheet cannot be obtained. When the AC electrolysis time is longer than 10 seconds, operational efficiency cannot be obtained.

In addition, according to an embodiment of the present disclosure, a temperature of the sulfuric acid solution may be from 40 to 80°C.

When the temperature of the sulfuric acid solution is lower than 40°C, the passivated layer-removing efficiency decreases. An upper limit of the temperature may be controlled to 80°C in consideration of safety.

In addition, according to an embodiment of the present disclosure, a concentration of the sulfuric acid solution may be from 50 to 300 g/L.

When the concentration of the sulfuric acid solution is less than 50 g/L, the removal of the passivated layer may be insufficient due to a decrease in conductivity of the solution. On the contrary, even when the concentration of the sulfuric acid is considerably increased, the passivated layer-removing effect is saturated, and thus the concentration of the sulfuric acid solution may be controlled to 300 g/L or less in consideration of economic feasibility of the electrolysis.

Hereinafter, the present disclosure will be described in more detail through examples. However, it is necessary to note that the following examples are only intended to illustrate the present disclosure in more detail and are not intended to limit the scope of the present disclosure. This is because the scope of the present disclosure is determined by matters described in the claims and able to be reasonably inferred therefrom.

### Examples

Slabs having the compositions of alloying elements shown in Table 1, which were prepared by continuous casting, were heated at 1,250°C for 2 hours and hot-rolled, followed by hot annealing at 1,100°C for 90 seconds. Subsequently, the resultant was cold-rolled with a reduction ratio of 70% and bright-annealed at 1,050°C after the cold rolling.

**Table 1**

| Steel Type | C | Si | Mn | Cr | Ni | Mo | Cu | N | W |
|---|---|---|---|---|---|---|---|---|---|
| Steel Type A | 0.025 | 0.4 | 0.8 | 21.3 | 10.5 | 0.6 | 0.8 | 0.2 | 0.01 |
| Steel Type B | 0.02 | 0.2 | 3 | 22 | 11 | 0.1 | 0.1 | 0.15 | 0.01 |
| Steel Type C | 0.03 | 2 | 0.5 | 22 | 12.5 | 0.1 | 0.1 | 0.2 | 0.5 |

Subsequently, electrolysis was performed under the conditions of Table 2 below, and interfacial contact resistance values under the conditions were measured. Evaluation of the interfacial contact resistance was performed as follows. Two pieces of the prepared material each having an area of 50 cm² were prepared, and one piece of carbon paper (SGL-10BA) having an area of 4 cm² and used as a gas diffusion layer was interposed therebetween, and then interfacial contact resistance was evaluated 5 times under a contact pressure of 100 N/cm².

**Table 2**

| Example | Steel Type | Electrolysis | | | | | Interfacial contact resistance (mΩcm²) |
|---|---|---|---|---|---|---|---|
| | | Concentrat ion of sulfuric acid (g/L) | Temperatu re of sulfuric acid (°C) | Applied current density (A/dm²) | Current applicati on time (s) | Frequency of current (Hz) | |
| Example 1 | A | 200 | 60 | 15 | 7 | 60 | 5.8 |
| Example 2 | B | 200 | 60 | 15 | 7 | 60 | 6.8 |
| Example 3 | C | 200 | 60 | 15 | 7 | 60 | 7.9 |
| Example 4 | C | 200 | 60 | 15 | 7 | 30 | 9.2 |
| Example 5 | C | 200 | 60 | 15 | 7 | 120 | 7.6 |
| Example 6 | C | 200 | 60 | 30 | 7 | 60 | 8 |
| Example 7 | C | 200 | 80 | 15 | 7 | 60 | 8.3 |
| Comparative Example 1 | C | 200 | 60 | 20 | 7 | 5 | 25.5 |
| Comparative Example 2 | C | 200 | 60 | 15 | 7 | DC | 52.5 |
| Comparative Example 3 | C | 200 | 60 | 5 | 7 | 10 | 18.3 |
| Comparative Example 4 | C | 200 | 60 | 10 | 7 | 60 | 53.1 |
| Comparative Example 5 | C | 200 | 30 | 15 | 7 | 60 | 31.7 |

Referring to Table 2, in the case where electrolysis was performed under the conditions of sulfuric acid and current suggested by the present disclosure, an interfacial contact resistance of at most 10 mΩ·cm² was able to be obtained.

On the contrary, in Comparative Example 1, the surface reforming effect decreased due to the frequency of 5 Hz, so that a slightly high interfacial contact resistance of 25.5 mΩ·cm² was obtained.

In Comparative Example 2, DC electrolysis was performed instead of AC electrolysis, so that a high interfacial contact resistance of 52.5 mΩ·cm² was obtained.

In Comparative Examples 3 and 4, current densities lower than 15 A/dm² were applied, and thus the layer formed by bright annealing was not removed and a high interfacial contact resistance exceeding 10 mΩ·cm² was obtained. In Comparative Example 5, a temperature of the sulfuric acid solution was below 40°C, and thus removal of the layer formed by bright annealing is not sufficient, resulting in a high interfacial contact resistance of 31.7 mΩ·cm².

According to the disclosed embodiment, the contact resistance may be 10 mΩ·cm² or less by optimizing the conditions of current density and frequency during an electrolysis process, without additional surface treatment such as coating, and thus the austenitic stainless steel according to the present disclosure may be applied to a material of polymer fuel cell separators.

While the present disclosure has been particularly described with reference to exemplary embodiments, it should be understood by those of skilled in the art that various changes in form and details may be made without departing from the spirit and scope of the present disclosure.

### [Industrial Applicability]

The austenitic stainless steel for fuel cell separators according to the present disclosure may be industrially used by reducing manufacturing costs and manufacturing time because contact resistance is improved by optimizing electrolysis conditions, and accordingly an additional post-processing step is not required.

## Claims

1. An austenitic stainless steel for a fuel cell separator with improved contact resistance comprising, in percent by weight (wt%), at most 0.1% of C (excluding 0), at most 3.0% of Si (excluding 0), at most 3.0% of Mn (excluding 0), 20 to 30% of Cr, 8 to 20% of Ni, at most 0.003% of S, at most 0.03% of P, at most 0.6% of Mo (excluding 0), at most 0.8% of Cu (excluding 0), 0.1 to 0.3% of N, at most 2.0% of W (excluding 0), and the remainder being Fe and other inevitable impurities.

2. The austenitic stainless steel according to claim 1, wherein the austenitic stainless steel comprises, in percent by weight (wt%), 0.01 to 0.5% of W.

3. The austenitic stainless steel according to claim 1, wherein the austenitic stainless steel has an interfacial contact resistance of at most 10 mΩ·cm² (100 N/cm²).

4. A method of manufacturing an austenitic stainless steel for a fuel cell separator with improved corrosion resistance, the method comprising:
bright annealing a cold-rolled austenitic stainless steel comprising, in percent by weight (wt%), at most 0.1% of C (excluding 0), at most 3.0% of Si (excluding 0), at most 3.0% of Mn (excluding 0), 20 to 30% of Cr, 8 to 20% of Ni, at most 0.003% of S, at most 0.03% of P, at most 0.6% of Mo (excluding 0), at most 0.8% of Cu (excluding 0), 0.1 to 0.3% of N, at most 2.0% of W (excluding 0), and the remainder being Fe and other inevitable impurities; and
performing alternating current electrolysis on the bright-annealed material in a sulfuric acid solution,
wherein the alternating current electrolysis is performed by applying a current density of 15 to 30 A/dm² for 7 seconds to 10 seconds.

5. The method according to claim 4, wherein the austenitic stainless steel comprises, in percent by weight (wt%), 0.01 to 0.5% of W.

6. The method according to claim 4, wherein the bright annealing is performed at a temperature of 1050°C to 1150°C.

7. The method according to claim 4, wherein a temperature of the sulfuric acid solution is from 40 to 80°C.

8. The method according to claim 4, wherein a concentration of the sulfuric acid solution is from 50 to 300 g/L.

9. The method according to claim 4, wherein a frequency of the alternating current is from 10 to 120 Hz.
